# EUROPEAN PATENT APPLICATION

(11) **EP 4 664 069 A1**
(43) Date of publication of application: **17.12.2025**
(21) Application number: 25182657.4
(22) Date of filing: 13.06.2025
(51) Int. Cl.: G01C 15/00, G01S 7/48, G01S 17/42, G01S 17/89

(54) **SURVEYING METHOD USING LASER SCANNER, LASER SCANNER, AND SURVEYING PROGRAM**

(30) Priority: 14.06.2024 JP 2024096823
(71) Applicant: Topcon Corporation, Tokyo 174-8580 (JP)
(72) Inventor: SASAKI, You, Tokyo, 174-8580 (JP)
(74) Representative: Schmitt-Nilson Schraud Waibel Wohlfrom Patentanwälte Partnerschaft mbB

(57) **Abstract**

The present disclosure allows the acquisition of point cloud data by multiple laser scans with a simple operation without including a known point in a scanning range for each scan. A surveying method using a laser scanner 2 includes: first laser scan of multiple reflection prisms 4 at unknown positions and a survey target range; second laser scan of a range including the multiple reflection prisms 4 that were subjected to the first laser scan and that is different from the range of the first laser scan; extraction of relative positions of the reflection prisms 4 from first point cloud data PC₁ acquired by the first laser scan and second point cloud data PC₂ acquired by the second laser scan; and creation of connection data 352 by connecting the first point cloud data PC₁ and the second point cloud data PC₂.

## Description

The present disclosure relates to a surveying method using a laser scanner, a laser scanner, and a surveying program.

A measurement method for obtaining point cloud data of a space by combining point clouds using a laser scanner has been proposed. For example, Japanese Unexamined Patent Publication No. 2023-120343 discloses a surveying method. In this method, a laser scanner performs first laser scan of a range including multiple optical reflection targets at known positions, extraction of bright spots of light reflected from the optical reflection targets within laser scan data obtained by the first laser scan, second laser scan of the optical reflection targets based on the bright spots of the optical reflection targets, calculation of the position of the laser scanner by resection based on the measured positions of the optical reflection targets obtained by the second laser scan, and calculation of the position at each point in the laser scan data obtained by the first laser scan based on the calculated position of the laser scanner.

In the surveying method of Japanese Unexamined Patent Publication No. 2023-120343, it is necessary to survey a range including the optical reflection targets having positional information known in the absolute coordinate system (e.g., the site coordinate system) to connect both of the data (point cloud data) obtained by the first laser scan and the second laser scan. Thus, if there is no known point in a new laser scan range, a new known point needs to be set before the laser scan, disadvantageously involving a lot of man-hours.

The present disclosure is intended to provide a surveying method using a laser scanner, a laser scanner, and a surveying program that acquire point cloud data by multiple laser scans with a simple operation without including a known point in a scanning range for each scan.

A surveying method using a laser scanner according to the present disclosure includes: first laser scan of multiple reflection prisms at unknown positions and a survey target range; extraction of relative positions of the multiple reflection prisms from first point cloud data acquired by the first laser scan; second laser scan of a range that includes the multiple reflection prisms that were subjected to the first laser scan and that is different from the range of the first laser scan; extraction of relative positions of the multiple reflection prisms from second point cloud data acquired by the second laser scan; and creation of connection data by connecting the first point cloud data and the second point cloud data with the positions of the multiple reflection prisms being aligned.

A laser scanner according to the present disclosure includes: a scanner unit; a rotation controller; a scan data acquisition unit; and a controller. The controller performs: first laser scan of multiple reflection prisms at unknown positions and a survey target range; extraction of relative positions of the multiple reflection prisms from first point cloud data acquired by the first laser scan; second laser scan of a range that includes the multiple reflection prisms that were subjected to the first laser scan and that is different from the range of the first laser scan; extraction of relative positions of the multiple reflection prisms from second point cloud data acquired by the second laser scan; and creation of connection data by connecting the first point cloud data and the second point cloud data with the positions of the multiple reflection prisms being aligned.

A surveying program according to the present disclosure is a surveying program that is read and executed by a computer. The surveying program causes the computer to perform: first laser scan of multiple reflection prisms at unknown positions and a survey target range; extraction of relative positions of the multiple reflection prisms from first point cloud data acquired by the first laser scan; second laser scan of a range that includes the multiple reflection prisms that were subjected to the first laser scan and that is different from the range of the first laser scan; extraction of relative positions of the multiple reflection prisms from second point cloud data acquired by the second laser scan; and creation of connection data by connecting the first point cloud data and the second point cloud data with the positions of the multiple reflection prisms being aligned.

The surveying method using the laser scanner, the laser scanner, and the surveying program of the present disclosure can acquire point cloud data by multiple laser scans with a simple operation without including a known point in a scanning range for each scan.
[FIG. 1] FIG. 1 is a view of an overall configuration of a scanner system.
[FIG. 2] FIG. 2 is a block diagram of a laser scanner.
[FIG. 3] FIG. 3 is a block diagram of a terminal device.
[FIG. 4] FIG. 4 is a flowchart of control of the terminal device and the laser scanner.
[FIG. 5] FIG. 5 is a top view of a survey range of a survey target from which point cloud data is acquired.
[FIG. 6] FIG. 6 is a view of examples of operation screens shown on a display of the terminal device.
[FIG. 7] FIG. 7 is a view of examples of a panoramic image confirmation screen and a top view confirmation screen.

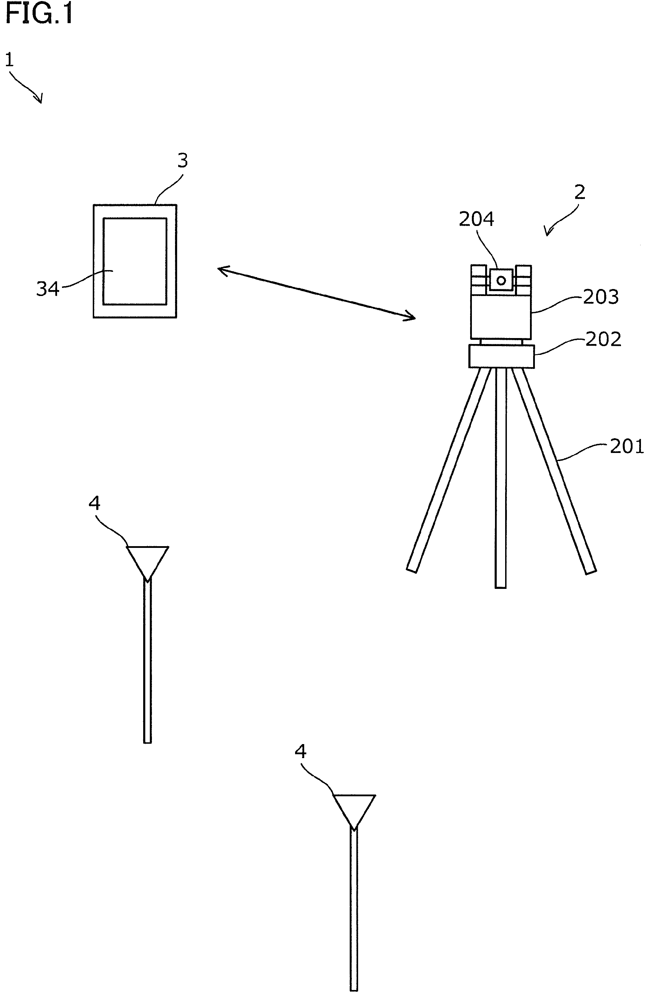

Embodiments of the present disclosure will be described below with reference to the drawings. FIG. 1 is a view of an overall configuration of a scanner system 1. The scanner system 1 includes a laser scanner 2 (scanner device), a terminal device 3 (control device), and reflection prisms 4 (optical reflection targets).

The laser scanner 2 includes a support leg 201 that is a tripod, a base 202 supported by the support leg 201, a horizontal rotation unit 203 that is horizontally rotatable on the base 202, and a vertical rotation unit 204 that is vertically rotatable with respect to the horizontal rotation unit 203. The vertical rotation unit 204 is provided with an optical system that emits and receives laser scan light.

The laser scanner 2 emits the laser scan light and receives its reflection at a specific repetition frequency while vertically rotating the vertical rotation unit 204. The laser scan is performed for a set range while combining the vertical rotation of the vertical rotation unit 204 and the horizontal rotation of the horizontal rotation unit 203.

The laser scanner 2 can calculate a distance to the reflection point from the difference (phase difference) in light reception timing of measurement light propagated through a reference optical path provided inside and actual measurement light. The distance to the reflection point can also be obtained from propagation time of the measurement light.

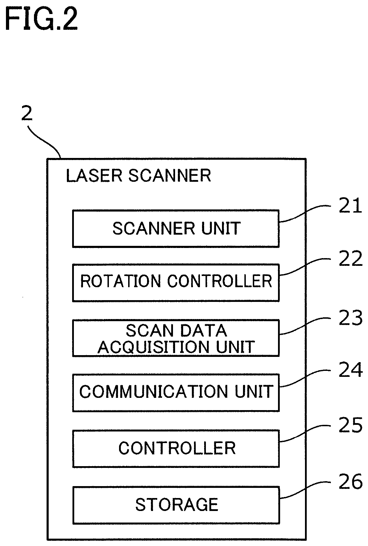

FIG. 2 is a block diagram of the laser scanner 2. The laser scanner 2 includes a scanner unit 21, a rotation controller 22, a scan data acquisition unit 23, a communication unit 24, a controller 25, and a storage 26.

The scanner unit 21 includes a scan light emitting unit, a scan light receiving unit, and an optical system. The rotation controller 22 controls the rotations of the horizontal rotation unit 203 and the vertical rotation unit 204 and measures their rotation angles. The scan data acquisition unit 23 acquires scan data 351ₙ (point cloud data PCₙ) of the laser scan performed by the scanner unit 21. The point cloud data includes information on a distance between the laser scanner 2 and the reflection point, an angle to the reflection point (an angle with respect to a predetermined reference), and a received light intensity. The communication unit 24 performs wired or wireless communication with the terminal device 3 (control device).

The controller 25 (the same applies to a controller 31 described later) executes functions and/or methods implemented by codes or commands included in programs stored in the storage 26 (storage 35). Examples of the controller 25 include a central processing unit (CPU), a micro-processing unit (MPU), a GPU, a micro-controller unit (MCU), a processor core, a multiprocessor, an ASIC, and an FPGA. The controller 25 may implement each process disclosed in each embodiment using a logic circuit or a dedicated circuit formed in an integrated circuit. These circuits may be one or more integrated circuits. A single integrated circuit may execute the multiple types of processing described in each embodiment.

The storage 26 (the same applies to the storage 35) can store acquired information such as a measured signal. The storage 26 (storage 35) is implemented by various types of non-transitory storage media such as an HDD, an SSD, and a flash memory. The storage 26 (storage 35) has a function of storing various programs and data that are necessary. The storage 26 (storage 35) stores a surveying program of the present embodiment.

The laser scanner 2 includes a computer controlled by the controller 25. The controller 25 controls the functions of functional units (the scanner unit 21, the rotation controller 22, the scan data acquisition unit 23, the communication unit 24, and the storage 26) by causing the computer to execute programs such as a surveying program stored in the storage 26.

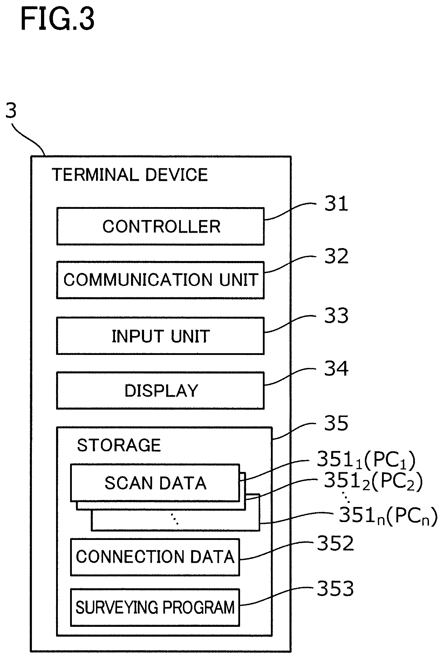

FIG. 3 is a block diagram of the terminal device 3. The terminal device 3 instructs control of the laser scanner 2 and displays an acquisition status of the point cloud data. Examples of the terminal device 3 include a device such as a personal digital assistant (PDA), a smartphone, or a personal computer that can be carried by an operator. The terminal device 3 includes a controller 31, a communication unit 32, an input unit 33, a display 34, and a storage 35.

The controller 31 is a processing device such as a CPU, similarly to the controller 25. The terminal device 3 includes a computer controlled by the controller 31. The terminal device 3 also stores various programs such as a surveying program in the storage 35. The controller 31 controls the functions of functional units (the communication unit 32, the input unit 33, the display 34, and the storage 35) by causing the computer to execute the programs. The terminal device 3 and the laser scanner 2 can operate in cooperation with each other in accordance with the surveying programs executed by the terminal device 3 and the laser scanner 2.

The communication unit 32 is configured to be able to communicate with an external device such as the laser scanner 2 by wire or wirelessly.

The input unit 33 is an operation unit that allows various instructions and settings to be inputted to the terminal device 3. The display 34 is formed of, for example, a liquid crystal display. When the display 34 is a touch panel, the input unit 33 and the display 34 are integrally formed, and the input unit 33 can accept a pressure-sensitive or electrostatic input from the operator.

The storage 35 stores the scan data 351ₙ (including point cloud data PCₙ (first point cloud data and second point cloud data)), connection data 352, and a surveying program 353. The connection data 352 is a survey result of a survey range 51 obtained by connecting multiple sets of point cloud data PCₙ. The storage 35 of the present embodiment is a non-transitory storage medium (or a storage device) that stores a computer-readable surveying program 353 included in the terminal device 3.

The reflection prism 4 is, for example, a corner cube prism arranged at an appropriate height of a pin pole. Thus, the reflection prism 4 has retroreflective properties and can reflect the light incident from the laser scanner 2 toward the laser scanner 2 in the direction opposite to the incident direction. The reflection prism 4 may be formed of other retroreflective members. The retroreflective member may be, for example, a member (e.g., a reflective sheet and a target plate) that reflects light emitted from the laser scanner 2 so that the laser scanner 2 can detect the reflected light at relatively high light intensity.

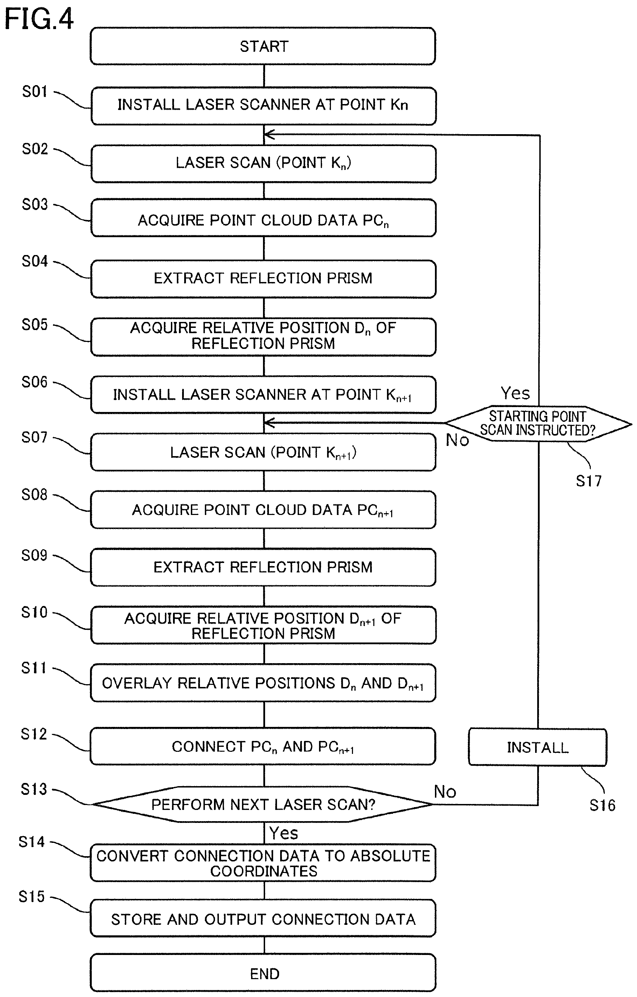

A surveying method using the laser scanner 2 will be described below. FIG. 4 is a flowchart of control of the laser scanner 2. Each step (process) shown in FIG. 4 is performed by the laser scanner 2 or by the laser scanner 2 executing a surveying program according to an instruction from the terminal device 3.

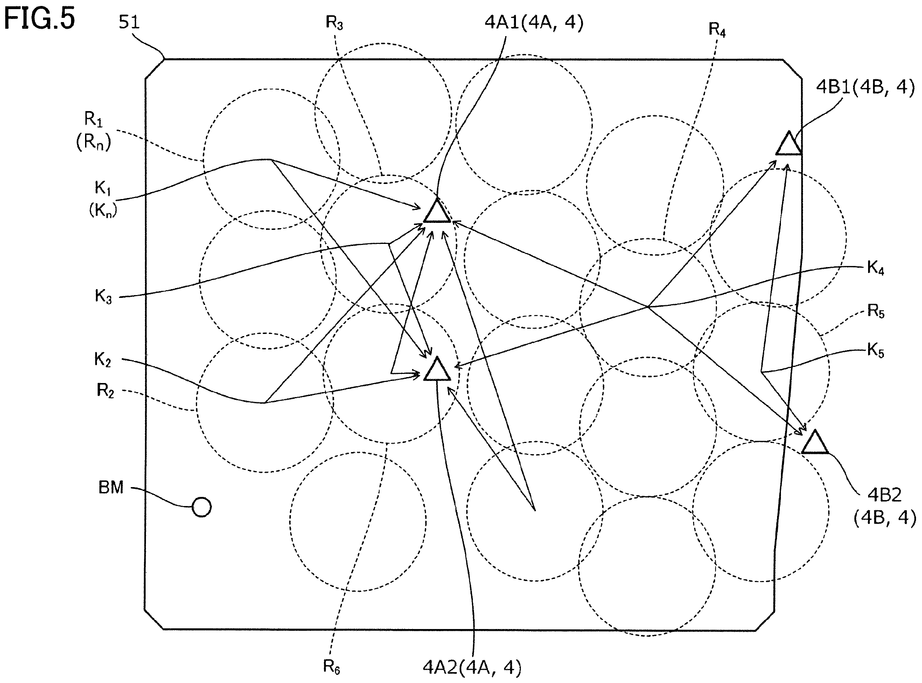

FIG. 5 is a top view of the survey range 51 which is a survey target (e.g., a farm field or a civil engineering site) for which point cloud data is acquired. A range Rₙ (n is an item number for distinguishing different pieces of information, the same applies hereinafter) indicates a survey range in which the laser scanner 2 placed at a point Kₙ can acquire the point cloud data PCₙ (scan data 351ₙ). Thus, the range Rₙ is an approximate assumed region where the point cloud data, which is indicated by a substantially circular shape centered on the point Kₙ when the survey range 51 is viewed from above, can be acquired.

In Step S01, first, the laser scanner 2 is installed at an arbitrary point K₁ (Kₙ) in the survey range 51, and leveling is performed.

Reflection prisms 4A1 (4A), 4A2 (4A) are placed inside or outside the survey range 51 before or after the installation of the laser scanner 2. Each of the reflection prisms 4A is an unknown point whose position is unknown in the absolute coordinates (such as the site coordinate system) with respect to the survey target. The reflection prisms 4A are positioned so that a survey from different points Kₙ (e.g., points K₁ and points K₂) is allowed.

Although the reflection prisms 4 may be arranged inside the range Rₙ where the point cloud data can be acquired by a single survey, the reflection prisms 4 may be arranged outside the range Rₙ because the reflection of light from the reflection prisms 4 can be detected at a higher light intensity than the reflection from a reflection point such as the ground or a building. The reflection prisms 4 may be placed outside the survey range 51.

In the present embodiment, first, the reflection prism 4A1 is arranged in a range R₃, the reflection prism 4A2 is arranged in a range R₆, and the laser scanner 2 is arranged at the point K₁.

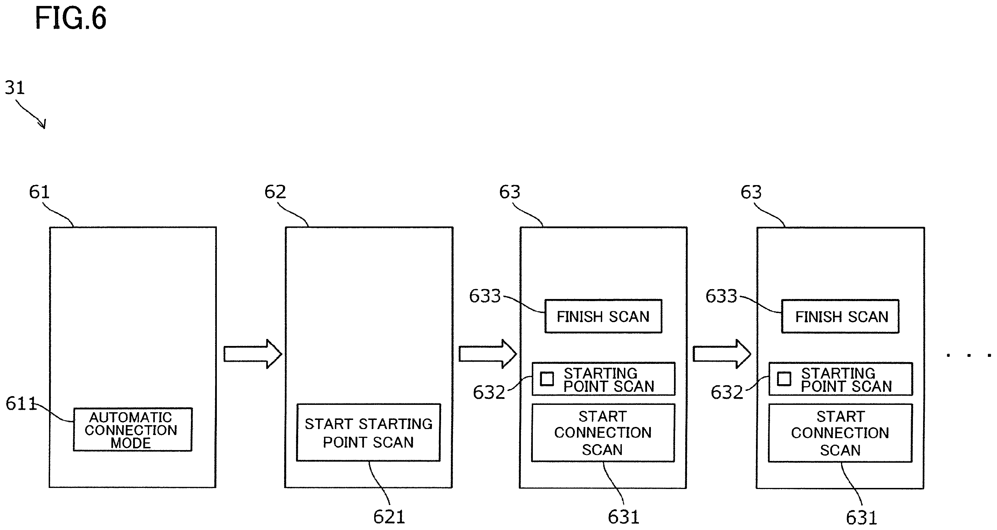

In Step S02, the laser scanner 2 performs first laser scan. FIG. 6 is a view of examples of operation screens 61 to 63 shown on the display 34 of the terminal device 3. When receiving the user's instruction input to an automatic connection mode selector 611 on the operation screen 61, the terminal device 3 causes a transition from the operation screen 61 to the next operation screen 62.

When receiving the user's instruction input to a starting point scan start selector 621 on the operation screen 62, the terminal device 3 causes the laser scanner 2 to perform a laser scan (first laser scan) of the reflection prisms 4 and the survey target range Rₙ. This laser scan is performed according to the instruction input to the starting point scan start selector 621 (a starting point scan instruction section) shown on the display 34 of the terminal device 3 that controls the laser scanner 2. When receiving the user's instruction input to the starting point scan start selector 621 on the operation screen 62, the terminal device 3 causes a transition from the operation screen 62 to transition to the next operation screen 63.

In Step S03, the laser scanner 2 performs the laser scan, and then transmits scan data 351₁ (351ₙ) (including point cloud data PC₁ (PCₙ)) to the terminal device 3. The terminal device 3 acquires point cloud data PC₁ from the laser scanner 2 placed at the point K₁.

In Step S04, the laser scanner 2 extracts the reflection prisms 4 from the point cloud data PC₁. The reflection prisms 4 are detected as bright spots having high brightness although when they are arranged in the range R₁. The terminal device 3 can determine that bright spots (overflow points) having brightness equal to or higher than a predetermined value in the point cloud data PC₁ are the reflection prisms 4A1 and 4A2.

In Step S05, the terminal device 3 automatically searches for the reflection prisms 4A1 and 4A2 for connection from the point cloud data (first point cloud data) acquired by the laser scan performed in Step S02 (the first laser scan), and extracts the reflection prisms 4A1 and 4A2 in association with information of their relative positions D_{4A11} and D_{4A21} (Dₙ). The relative positions D_{4A11} and D_{4A21} are given temporary coordinates. For example, relative coordinates (K₁ coordinate system) having the point K₁ where the laser scanner 2 is located as the origin are given as temporary coordinate values to the reflection prisms 4A1 and 4A2. Thus, at the time the laser scan is performed, the temporary local coordinate system is used as the coordinate system of the point cloud data PCₙ.

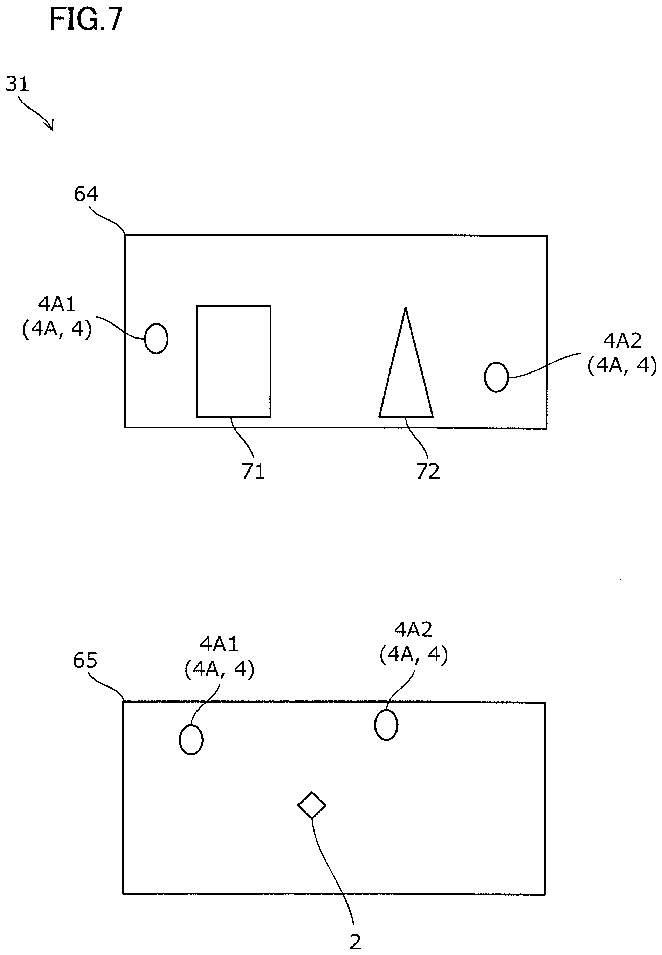

FIG. 7 is a schematic view of examples of a panoramic image confirmation screen 64 and a top view confirmation screen 65 that can be shown on the display 34. The panoramic image confirmation screen 64 shows the point cloud data PCₙ viewed from the laser scanner 2 at the point Kₙ. The reflection prisms 4 and structures 71, 72 detected by the laser scan are shown on the panoramic image confirmation screen 64 of FIG. 7.

The top view confirmation screen 65 is the point cloud data PCₙ in a top view centered on the point Kₙ where the laser scanner 2 is placed. The reflection prisms 4 detected by the laser scan are shown on the top view confirmation screen 65 of FIG. 7.

The terminal device 3 may display candidate points of the detected reflection prisms 4 on one or both of the panoramic image confirmation screen 64 and the top view confirmation screen 65, and may execute a process of prompting the user whether to accept use of the candidate points as the reflection prisms 4 for connecting the point cloud data (e.g., may display an accept/reject selector on the display 34).

If the extraction of the reflection prisms 4 for connection seems to have failed, for example, if only a single candidate of the reflection prisms 4 is found, the terminal device 3 may notify the user of the failure by indication on the display 34.

In Step S06, the laser scanner 2 is moved to a point Kₙ₊₁ in a range Rₙ₊₁ that includes the same reflection prisms 4 as those previously laser scanned (the first laser scanned reflection prisms) and is different from the previously laser scanned range Rₙ. Here, the reflection prism 4A1 is placed in the range R₃, the reflection prism 4A2 is placed in the range R₆, and the laser scanner 2 is placed at a point K₂.

In Step S07, the laser scanner 2 performs second laser scan. When receiving the user's instruction input to the starting point scan start selector 621 on the operation screen 63, the terminal device 3 causes the laser scanner 2 to perform a laser scan (the second laser scan) of a range R₂ (Rₙ₊₁) that includes the same reflection prisms 4A1 and 4A2 as those previously laser scanned (the first laser scanned reflection prisms) and is different from the previously laser scanned range R₁ (Rₙ). This laser scan is performed according to an instruction input to the starting point scan start selector 621 (starting point scan instruction section) shown on the display 34 of the terminal device 3 (control device) that controls the laser scanner 2.

When receiving the user's instruction input to the starting point scan start selector 621 on the operation screen 62, the terminal device 3 causes a transition from the operation screen 62 to the next operation screen 63.

In Step S08, the laser scanner 2 performs the laser scan, and transmits the scan data 351ₙ including the point cloud data PC₂ (PCₙ) to the terminal device 3. The terminal device 3 acquires the point cloud data PC₂ (PCₙ) from the laser scanner 2.

In Step S09, the laser scanner 2 extracts the reflection prisms 4A1 and 4A2 from the point cloud data PC₂ (PCₙ). The reflection prisms 4A1 and 4A2 are detected as bright spots having high brightness although when they are arranged in the range R₂ (Rₙ). The terminal device 3 can determine that the bright spots (overflow points) having a brightness equal to or higher than a predetermined value in the point cloud data PC₁ (PCₙ) are the reflection prisms 4A1 and 4A2, as in Step S04.

In Step S10, the terminal device 3 automatically searches for the reflection prisms 4A1 and 4A2 from the point cloud data (second point cloud data) acquired by the laser scan of Step S07 (the second laser scan), and extracts the reflection prisms 4A1 and 4A2 in association with the information of their relative positions D_{4A12} and D_{4A22} (Dₙ₊₁).

The relative positions D_{4A12} and D_{4A22} are given temporary coordinates. For example, relative coordinates (K₂ coordinate system) having the point K₂ where the laser scanner 2 that laser scanned the reflection prisms 4A1 and 4A2 is located as the origin are given as temporary coordinate values to the reflection prisms 4A1 and 4A2. Thus, at the time the laser scan is performed, the temporary local coordinate system is used as the coordinate system of the point cloud data PC₂.

In Step S11, the terminal device 3 obtains a conversion parameter that aligns the reflection prisms 4A1 and 4A2 included in the point cloud data PC₁ and PC₂ of different scan ranges. For example, the relative coordinates of the reflection prisms 4A1 and 4A2 in the point cloud data PC₁ are defined as relative positions D_{4A11} and D_{4A21}, and a difference of the relative position D_{4A21} relative to the relative position D_{4A11} is defined as a differential position vector ΔA. Likewise, the relative coordinates of the reflection prisms 4A1 and 4A2 in the point cloud data PC₂ are defined as relative positions D_{4A12} and D_{4A22}, and a difference of the relative position D_{4A22} relative to the relative position D_{4A12} is defined as a differential position vector ΔB.

The terminal device 3 compares, for example, the orientation and the length of the differential position vectors ΔB and ΔA, and obtains the orientation and the length for matching the vectors (to the highest degree or amount of matching) as the conversion parameters.

Whether or not the reflection prisms 4 included in the different point cloud data PCₙ are the same can be determined by tracking the movement of the laser scanner 2, the user's selection instruction to the terminal device 3, the size of the bright spot of the light reflected from the reflection prisms 4, the reflection intensity (light intensity) or received light intensity, the wavelength, or the shape of the reflected light.

In Step S12, the terminal device 3 creates connection data 352 by connecting the point cloud data PC₁ (the first point cloud data) and the point cloud data PC₂ (the second point cloud data) with the positions of the reflection prisms 4A1 and 4A2 aligned using the conversion parameter. The connection data 352 is obtained, for example, in the K₁ coordinate system of the previously acquired point cloud data PC₁ to match the point cloud data PC₂ (PCₙ₊₁) acquired later with the previously acquired point cloud data PC₁ (PCₙ).

In Step S13, when an end instruction section 633 to finish the acquisition of the point cloud data is selected via the input unit 33, the terminal device 3 proceeds to the process of Step S14. If an additional laser scan of the next range Rₙ₊₂ is required, the process proceeds to Step S16.

In Step S16, the laser scanner 2 is moved by the user to a point K₃ which is in a range R₂ of the next survey, followed by installation and leveling.

In Step S17, the terminal device 3 determines whether an instruction is inputted to a starting point scan instruction section 632 on the operation screen 63 shown on the display 34 (e.g., whether a check mark is entered). If there is no instruction input to the starting point scan instruction section 632 (No is selected in Step S17), the terminal device 3 executes the process of Step S07.

In the survey range 51 shown in FIG. 5, the two reflection prisms 4A1 and 4A2 can be surveyed from the point K₃, as from the points K₁ and K₂. The reflection prism 4A1 is arranged inside the range R₃ in which point cloud data PC₃ can be acquired when the laser scanner 2 is placed at the point K₃. Although the reflection prism 4A2 is arranged outside the range R₃, the intensity of light reflected from the reflection prism 4A2 is sufficient for the detection, and thus the laser scanner 2 can detect both of the bright spots of the reflection prisms 4A1 and 4A2 in the point cloud data PC₃.

Thus, the laser scanner 2 can acquire the new point cloud data PC₃ (PCₙ) and create (update) the connection data 352 by connecting the new point cloud PC₃ (PCₙ) using the same reflection prisms 4 as those previously used.

When the instruction input to the starting point scan instruction section 632 is received (Yes is selected in Step S17), the laser scanner 2 executes the process of Step S02. The laser scanner 2 updates the identification information associated with the point cloud data PCₙ to be acquired next. For convenience of description, one is added to the subscript "n" of each of the symbols (Kₙ, Rₙ, PCₙ).

The laser scanner 2 performs a new automatic search for reflection prisms 4B (second reflection prisms) with unknown positions by executing the processes of Steps S02 to S 12 again, and uses the new reflection prisms 4B (second reflection prisms) for the subsequent creation of the connection data 352.

The connection data 352 created by connecting the point cloud data PCₙ using the reflection prisms 4A and the connection data 352 created by connecting the point cloud data PCₙ using the reflection prisms 4B are connected together as one connection data using the reflection prisms 4A used for the first connection or the reflection prisms 4B used for the later connection. That is, when the laser scanner 2 performs the laser scan at a certain point Kₙ (a point K₄ for surveying a range R₄ in FIG. 5), the reflection prisms 4A and the reflection prisms 4B can be extracted from the point cloud data PCₙ.

If the reflection prisms 4A and 4B are extracted at one or more points Kₙ, and new reflection prisms 4B can be detected in the subsequent laser scan (e.g., at a point K₃ for surveying a range R₅), point cloud data PC₄ and PC₃ can be continuously connected to update the connection data 352.

In Step S14, the terminal device 3 converts the coordinates of point clouds included in the connection data 352 into absolute coordinates with reference to a known point BM detected by any of the laser scans performed so far (the first or second laser scan). In the example shown in FIG. 5, an additional reflection prism 4 is placed at the known point BM so that the coordinate values of the known point BM can be acquired by the laser scan at the point K₂. In the surveying method using the laser scanner 2, the point cloud data connected in the local coordinate system are finally converted into the site coordinate system, eliminating the need to obtain the absolute coordinates (site coordinates) of the reflection prisms 4 each time. This can reduce man-hours and hours of work as a whole.

In Step S15, the terminal device 3 stores the connection data 352 in which the coordinates of the point clouds are converted into the absolute coordinates (or the site coordinates) in the storage 35. The connection data 352 is outputted as data or printed in accordance with an instruction to the input unit 33 as needed.

The surveying program and method using the laser scanner of the present disclosure have been described above. The surveying program and the method perform: the first laser scan of the reflection prisms 4 with unknown positions and the survey target range; extraction of the relative positions of the reflection prisms 4 from the first point cloud data acquired by the first laser scan; the second laser scan on the range that includes the reflection prisms 4 that were subjected to the first laser scan and that is different from the range of the first laser scan; extraction of the relative positions of the reflection prisms 4 from the second point cloud data acquired by the second laser scan; and creation of the connection data by connecting the first point cloud data and the second point cloud data with the positions of the reflection prisms 4 being aligned.

The user can acquire the point cloud data by multiple laser scans without including the known point in the scanning range for each scan, and can acquire the point cloud data with a simple operation.

As an example of other existing surveying methods, when connecting a point cloud acquired from the laser scanner 2 placed at the point Kₙ and a point cloud acquired from another laser scanner placed the point Kₙ₊₁, alignment is performed for matching the point clouds using a common point cloud in a common area of the scan ranges including the points Kₙ and Kₙ₊₁. In this point cloud matching, the target or a feature point is scanned from the different points Kₙ to perform the alignment. The accuracy of the point cloud data matching increases as the overlapping portion increases.

However, if the overlap of the scan ranges is essential, the range or amount of the point cloud data to be newly acquired is reduced, increasing the frequency of installation of the laser scanner 2. This reduces the efficiency of generating the point cloud data. The accuracy of the point cloud matching is unstable because it depends on the environment. For example, the point cloud matching requires a characteristic shape, and thus it is not easy to connect the point cloud data with high accuracy in a place with few characteristic terrains or structures, such as a field.

The surveying method of the present embodiment uses the reflection prism as a reference for the connection. However, it is not essential that the reflection prism 4 is in a common area of the scan ranges at the different points Kₙ. Thus, the surveying method of the present embodiment can create the point cloud data (connection data) of the entire survey range with high accuracy and less frequency of installation of the scanner.

The configuration has been described in which in the surveying method described above, the first laser scan is performed multiple times in different ranges including the multiple reflection prisms 4 at unknown positions in common, to connect the first point cloud data, the first laser scan and the second laser scan are performed according to an instruction input to a starting point scan instruction section 632 shown on a display 34 of a control device (terminal device 3) that controls the laser scanner, and when the instruction input to the starting point scan instruction section 632 shown on the display 34 is received, a new automatic search for multiple second reflection prisms at unknown positions is performed, and the multiple second reflection prisms are used for subsequent creation of connection data.

In the survey using the point cloud data, the different reflection prisms 4 can be used for connecting the point cloud data. this allows the acquisition of the point cloud data with a simple operation without including the known point in the scanning range for each scan, although the survey range 51 is wide.

The embodiments of the present disclosure have been described above, but the present disclosure is not limited to the embodiments.

For example, if the data obtained by the first scan is given the site coordinate system, the point cloud data with no absolute coordinates may be given the site coordinates by connecting the point cloud data with no absolute coordinates with the point cloud data with absolute coordinates, although the reflection prism 4 to be detected later has an unknown point. In this case, the point cloud data PCₙ in the absolute coordinates adjusted to the final site coordinate system can be given for each laser scan.

Further, the reflection prism 4 with known coordinates may be measured by the first laser scan to use the absolute coordinate system of the reflection prism 4, and relative temporary coordinates may be used for the subsequent connection (the known coordinate values make the search easy).

It the present embodiment, the two reflection prisms 4 are used for the connection, but three or more reflection prisms 4 may be used. The conversion parameter for the point cloud data PCₙ can be accurately obtained by increasing the number of reflection prisms 4 used for the connection.

An exemplary configuration of the present disclosure is described below.
[1] A surveying method using a laser scanner, the method including:
   first laser scan of multiple reflection prisms at unknown positions and a survey target range;
   extraction of relative positions of the multiple reflection prisms from first point cloud data acquired by the first laser scan;
   second laser scan of a range that includes the multiple reflection prisms that were subjected to the first laser scan and that is different from the range of the first laser scan;
   extraction of relative positions of the multiple reflection prisms from second point cloud data acquired by the second laser scan; and
   creation of connection data by connecting the first point cloud data and the second point cloud data with the positions of the multiple reflection prisms being aligned.
[2] The surveying method of [1], wherein
   coordinates of a point cloud included in the connection data are converted to absolute coordinates with reference to a known point detected by either one of the first laser scan or the second laser scan.
[3] The surveying method of [1], wherein
   the first laser scan is performed multiple times in different ranges including the multiple reflection prisms at unknown positions in common, to connect the first point cloud data,
   the first laser scan and the second laser scan are performed according to an instruction input to a starting point scan instruction section shown on a display of a control device that controls the laser scanner, and
   when the instruction input to the starting point scan instruction section shown on the display is received, a new automatic search for multiple second reflection prisms at unknown positions is performed, and the multiple second reflection prisms are used for subsequent creation of the connection data.
[4] A laser scanner including:
   a scanner unit;
   a rotation controller;
   a scan data acquisition unit;
   a communication unit; and
   a controller, wherein
   the controller performs:
      first laser scan of multiple reflection prisms at unknown positions and a survey target range;
      extraction of relative positions of the multiple reflection prisms from first point cloud data acquired by the first laser scan;
      second laser scan of a range that includes the multiple reflection prisms that were subjected to the first laser scan and that is different from the range of the first laser scan;
      extraction of relative positions of the multiple reflection prisms from second point cloud data acquired by the second laser scan; and
      creation of connection data by connecting the first point cloud data and the second point cloud data with the positions of the multiple reflection prisms being aligned.
[5] A surveying program that is read and executed by a computer, wherein the surveying program causes the computer to perform:
   first laser scan of multiple reflection prisms at unknown positions and a survey target range;
   extraction of relative positions of the multiple reflection prisms from first point cloud data acquired by the first laser scan;
   second laser scan of a range that includes the multiple reflection prisms that were subjected to the first laser scan and that is different from the range of the first laser scan;
   extraction of relative positions of the multiple reflection prisms from second point cloud data acquired by the second laser scan; and
   creation of connection data by connecting the first point cloud data and the second point cloud data with the positions of the multiple reflection prisms being aligned.

### DESCRIPTION OF REFERENCE CHARACTERS

- 1: Scanner System
- 2: Laser Scanner
- 3: Terminal Device
- 4 (4A, 4A1, 4A2, 4B): Reflection Prism
- 21: Scanner Unit
- 22: Rotation Controller
- 23: Scan Data Acquisition Unit
- 24: Communication Unit
- 25: Controller
- 26: Storage
- 31: Controller
- 32: Communication Unit
- 33: Input Unit
- 34: Display
- 35: Storage
- 51: Survey Range
- 61 to 63: Operation Screen
- 64: Panoramic Image Confirmation Screen
- 65: Top View Confirmation Screen
- 71, 72: Structure
- 201: Support Leg
- 202: Base
- 203: Horizontal Rotation Unit
- 204: Vertical Rotation Unit
- 351ₙ (3511): Scan Data
- 352: Connection Data
- 353: Surveying Program
- 611: Automatic Connection Mode Selector
- 621: Starting Point Scan Start Selector
- 632: Starting Point Scan Instruction Section
- 633: End Instruction Section
- BM: Known Point
- D_{4A11}, D_{4A12}, D_{4A21}, D_{4A22}: Relative Position
- Kₙ (K₁ to K₃): Point
- Rₙ (R₁ to R₆): Range
- PCₙ (PC₁ to PC₄): Point Cloud Data
- ΔA, ΔB: Differential Position Vector

## Claims

1. A surveying method using a laser scanner (2), the method **characterized by** comprising:
first laser scan of multiple reflection prisms (4) at unknown positions and a survey target range;
extraction of relative positions of the multiple reflection prisms (4) from first point cloud data (PC₁) acquired by the first laser scan;
second laser scan of a range that includes the multiple reflection prisms (4) that were subjected to the first laser scan and that is different from the range of the first laser scan;
extraction of relative positions of the multiple reflection prisms (4) from second point cloud data (PC₂) acquired by the second laser scan; and
creation of connection data (352) by connecting the first point cloud data (PC₁) and the second point cloud data (PC₂) with the positions of the multiple reflection prisms (4) being aligned.

2. The surveying method of claim 1, wherein
coordinates of a point cloud included in the connection data (352) are converted to absolute coordinates with reference to a known point detected by either one of the first laser scan or the second laser scan.

3. The surveying method of claim 1 or 2, wherein
the first laser scan is performed multiple times in different ranges including the multiple reflection prisms (4) at unknown positions in common, to connect the first point cloud data (PC₁),
the first laser scan and the second laser scan are performed according to an instruction input to a starting point scan instruction section (632) shown on a display of a control device that controls the laser scanner (2), and
when the instruction input to the starting point scan instruction section (632) shown on the display is received, a new automatic search for multiple second reflection prisms at unknown positions is performed, and the multiple second reflection prisms are used for subsequent creation of the connection data (352).

4. A laser scanner (2) **characterized by** comprising:
a scanner unit;
a rotation controller;
a scan data acquisition unit; and
a controller, wherein
the controller performs:
first laser scan of multiple reflection prisms (4) at unknown positions and a survey target range;
extraction of relative positions of the multiple reflection prisms (4) from first point cloud data (PC₁) acquired by the first laser scan;
second laser scan of a range that includes the multiple reflection prisms (4) that were subjected to the first laser scan and that is different from the range of the first laser scan;
extraction of relative positions of the multiple reflection prisms (4) from second point cloud data (PC₂) acquired by the second laser scan; and
creation of connection data (352) by connecting the first point cloud data (PC₁) and the second point cloud data (PC₂) with the positions of the multiple reflection prisms (4) being aligned.

5. A surveying program (353) that is read and executed by a computer, **characterized in that**
the surveying program (353) causes the computer to perform:
first laser scan of multiple reflection prisms (4) at unknown positions and a survey target range;
extraction of relative positions of the multiple reflection prisms (4) from first point cloud data (PC₁) acquired by the first laser scan;
second laser scan of a range that includes the multiple reflection prisms (4) that were subjected to the first laser scan and that is different from the range of the first laser scan;
extraction of relative positions of the multiple reflection prisms (4) from second point cloud data (PC₂) acquired by the second laser scan; and
creation of connection data (352) by connecting the first point cloud data (PC₁) and the second point cloud data (PC₂) with the positions of the multiple reflection prisms (4) being aligned.
